# EUROPÄISCHE PATENTSCHRIFT

(11) **EP 3 976 962 B1**
(45) Veröffentlichungstag und Bekanntmachung des Hinweises auf die Patenterteilung: **06.12.2023**
(21) Anmeldenummer: 20726738.6
(22) Anmeldetag: 12.05.2020
(51) Int. Cl.: F03D 13/25, F03D 80/80

(54) **HOHLSTRUKTURELEMENT EINER WINDENERGIEANLAGE**
HOLLOW STRUCTURAL ELEMENT OF A WIND TURBINE
ÉLÉMENT STRUCTURAL CREUX D'UNE ÉOLIENNE

(30) Priorität: 31.05.2019 DE 102019114655
(43) Veröffentlichungstag der Anmeldung: 06.04.2022
(73) Patentinhaber: RWE Offshore Wind GmbH, 45141 Essen (DE)
(72) Erfinder: RUNGE, Dr.-Ing. Jörn, 31608 Marklohe (DE)
(74) Vertreter: Cohausz & Florack
(86) Internationale Anmeldenummer: PCT/EP2020/063153
(87) Internationale Veröffentlichungsnummer: WO 2020/239427

(56) Entgegenhaltungen:
- EP-A1- 3 258 559
- WO-A1-2015/071680
- WO-A1-2018/095643
- WO-A2-2011/033267
- DE-A1-102014 206 000
- KR-B1- 101 720 800

## Beschreibung

Der Gegenstand betrifft ein Hohlstrukturelement einer Windenergieanlage sowie eine Windenergieanlage mit einem solchen Hohlstrukturelement.

Windenergieanlagen werden im Boden gegründet. Dies gilt vor allem für Offshore-Windenergieanlagen, die über eine Gründungsstruktur im Meeresboden verankert werden. Die Gründungsstruktur dient dann des Weiteren als Basis zum Aufbau des Turms samt Gondel und elektrischer Installationen.

Innerhalb der Gründungsstruktur ist eine Plattform, ein sogenanntes "Airtight"-Deck angeordnet.

Die elektrischen Energiekabel, die zur Verbindung der Windenergieanlage mit einem Energieversorgungsnetz dienen, werden entlang der Gründungsstruktur bis hin zur Plattform verlegt. In der Regel sind mehrere elektrische Kabelstränge zu einer Kabelanordnung eines Energiekabels zusammengefasst. Die elektrischen Leiter in den Kabelsträngen können einzeln isoliert sein. Die Kabelstränge können zusätzlich in einer gemeinsamen Isolation geführt sein. Die Leiterquerschnitte innerhalb der Kabelstränge werden auf theoretisch mögliche Maximalbelastungen ausgelegt. Solche Maximalbelastungen entstehen insbesondere dann, wenn einerseits die ohmschen Verluste innerhalb der Kabel groß sind und andererseits die Umgebungstemperatur an der Kabelanordnung hoch ist. Die ohmschen Verluste steigen quadratisch mit dem Strom entlang des Kabels und linear zum ohmschen Widerstand des Leiters. Zur Minimierung der ohmschen Verluste wird daher stets ein entsprechend großer Leitungsquerschnitt in den Kabelsträngen gewählt. Nachfolgend wird der Begriff Kabel ggf. sowohl für den Leiter in einem Kabelstrang, als auch den Kabelstrang und/oder die Kabelanordnung synonym genutzt.

Hohe Ströme entlang der Kabel treten bei hohen Windstärken auf. Für den Fall, dass aufgrund starker Winde der Strom in den Leitern groß ist und gleichzeitig die Umgebungstemperatur hoch ist, beispielsweise im Sommer, wenn die Sonne ungehindert auf die Windenergieanlage einstrahlt, kann es zu erheblichen Temperaturen innerhalb der Kabelanordnung kommen. Die Leiterquerschnitte sowie die Isolation der Kabelstränge werden oftmals so dimensioniert, dass selbst unter solchen Bedingungen, das heißt maximal möglichem Strom bei maximal möglicher Sonneneinstrahlung, die Kabel nicht beschädigt werden. Oftmals geht es hierbei um die Beschädigung der elektrischen Isolationsschicht des Kabels, welche ab einer Maximaltemperatur ihre isolierende Wirkung verliert. Diese thermischen Extrembelastungen der Kabel treten jedoch nur äußerst selten auf, müssen bei deren Auslegung jedoch berücksichtigt werden. Bei dieser Auslegung kann man die Leitertemperatur durch eine Verringerung des ohmschen Widerstandes des Leiters reduzieren.

Dazu kann man einerseits den Leiterquerschnitt erhöhen oder zu einem Leitermaterial mit kleinerem spezifischen ohmschen Widerstand übergehen: z.B. von Aluminium auf Kupfer. Beides führt zu erheblichen Mehrkosten als auch einem erheblich höheren Gewicht der Kabelanordnungen.

Aus der KR101720800B1 ist ein Abschattungselement für ein J-Tube beschrieben. Bei diesem Abschattungselement wird Luft durch Schlitze an dem J-Tube vorbeigeführt.

Dem Gegenstand lag die Aufgabe zugrunde, die Anforderungen an eine Kabelanordnung einer Windenergieanlage zu reduzieren.

Diese Aufgabe wird durch ein Hohlstrukturelement nach Anspruch 1 gelöst.

Ein Hohlstrukturelement gemäß dem Gegenstand kann eine oben genannte Gründungsstruktur oder ein J-Tube sein.

Die Kabelanordnung kann, wie oben beschrieben, an der Gründungstruktur entlang geführt werden . Dabei kann die Kabelanordnung innerhalb oder außerhalb der Gründungstruktur geführt werden. Auch kann die Kabelanordnung innerhalb zumindest des J-Tubes geführt sein. Ein J-Tube kann in der Gründungsstruktur oder außen an der Gründungsstruktur angeordnet sein. Insbesondere wenn das J-Tube außen an der Gründungsstruktur angeordnet ist, kann das Abschattungselement so angeordnet sein, dass das J-Tube zwischen der Gründungsstruktur und dem Abschattungselement geführt ist.

Die Kabel werden bei Windenergieanlagen in der Regel innerhalb des Hohlstrukturelements geführt. Zwischen der Wasseroberfläche und dem Austritt des Kabels aus dem Hohlstrukturelement, insbesondere im Bereich des Airtight-Decks, treten die höchsten Temperaturen an dem Kabel auf, da die natürliche Luftzirkulation nahezu unterbunden ist. In diesem Bereich sollte das Hohlstrukturelement durch das Abschattungselement abgeschattet werden.

Es wird vorgeschlagen, dass ein Abschattungselement an dem Hohlstrukturelement mit einem Abstand zu der Kabelanordnung angeordnet ist. Durch das Abschattungselement wird verhindert, dass die Kabelanordnung und/oder das Hohlstrukturelement, innerhalb der die Kabelanordnung geführt wird, unmittelbarer Sonneneinstrahlung, insbesondere wenn die Sonne nahe ihres Zenits ist, ausgesetzt ist. Hierdurch wird die thermische Maximalbelastung der Kabelanordnung reduziert, da selbst bei Starkwind und klarem Wetter die Kabelanordnung gegenüber herkömmlichen Anlagen einer geringeren Umgebungstemperatur ausgesetzt ist. Somit erfolgt eine bessere bzw. erhöhte Wärmeabfuhr an der Kabelanordnung durch Konvektion, da die Umgebungstemperatur gegenüber herkömmlichen Anlagen reduziert ist.

Das Hohlstrukturelement hat eine Längsachse. Ein Schnitt quer zur Längsachse, insbesondere senkrecht zur Längsachse, kann als Querschnitt verstanden werden. Wenn nachfolgend die Formen des Abschattungselements diskutiert werden, so ist damit in der Regel ein Querschnitt in der Ebene senkrecht zur Längsachse des Hohlstrukturelements gemeint.

Das Hohlstrukturelement kann einstückig oder mehrstückig sein. Für den Fall einer Gründungsstruktur kann das Hohlstrukturelement als Monopile gebildet sein und mit einem Übergangsstück (Transition Piece) verbunden sein oder das Übergangsstück aufweisen. Innerhalb der Gründungsstruktur, beispielsweise innerhalb des Monopiles oder des Übergangsstücks, kann eine Plattform angeordnet sein. Eine J-Tube kann an der Gründungsstruktur bis hin zur Plattform geführt sein. Dabei kann die J-Tube innerhalb oder außerhalb der Gründungsstruktur geführt sein. Eine J-Tube kann auch an einer nicht hohlen Gründungsstruktur geführt sein. Die Plattform ist dabei bevorzugt im Inneren der Gründungsstruktur angeordnet. Radial umlaufend kann darüber hinaus an der Gründungsstruktur eine Inspektionsplattform und/oder eine Landungsplattform angeordnet sein.

Das Abschattungselement ist zusätzlich zu diesen äußeren, radial umlaufenden Plattformen vorgesehen. Im Gegensatz zu den radial umlaufenden Plattformen ist das Abschattungselement dabei nur entlang zumindest eines Teilkreisbogens an dem Hohlstrukturelement angeordnet.

Gemäß einem Ausführungsbeispiel wird vorgeschlagen, dass das Abschattungselement bogenförmig geformt ist. Hierbei kann das Abschattungselement eine Krümmung aufweisen. Die Krümmung des Abschattungselements kann dabei geometrisch ähnlich zu der Krümmung des Hohlstrukturelements sein. Dabei ist insbesondere vorgeschlagen, dass das Abschattungselement zumindest einen Kreisbogen aufweist. Der Kreisbogen kann einen selben Mittelpunkt haben, wie ein Hohlstrukturelement und dieser kann dabei insbesondere zentrisch eines Hohlstrukturelements liegen.

Auch ist es möglich, dass das Abschattungselement gerade ist. Im Querschnitt kann das Abschattungselement gerade verlaufen.

Darüber hinaus ist es möglich, dass das Abschattungselement aus zumindest zwei winklig zueinander verlaufenden, geraden Abschnitten geformt ist. Der Winkel, den die beiden Abschnitte einschließen, kann das Hohlstrukturelement umgreifen.

Erfindungsgemäß ist das Abschattungselement entlang eines Bogenabschnitts um das Hohlstrukturelement herum angeordnet.

Der Bogenabschnitt ist kleiner als 360°. Insbesondere ist der Bogenabschnitt nur ein Teilkreisbogen. Der Bogenabschnitt hat insbesondere einen Bogenwinkel von zumindest 45°, bevorzugt zumindest 120°, insbesondere zumindest 240°. Der Bogenabschnitt umschließt insbesondere einen Winkel zwischen 90° und 150°, insbesondere einen Bereich zwischen 110° und 130°. Die genannten Bogenwinkel können ausreichend sein, um in Zeiten der maximalen Sonneneinstrahlung eine Abschattung der Kabelanordnung zu bewirken.

Gemäß einem Ausführungsbeispiel wird vorgeschlagen, dass das Abschattungselement an einer äußeren Mantelfläche des Hohlstrukturelements angeordnet ist. Dabei können Verbindungsstege stoffschlüssig an dem Hohlstrukturelement und dem Abschattungselement angeordnet sein.

Wie bereits erläutert kann das Hohlstrukturelement einteilig oder mehrteilig sein und als Monopile oder als Übergangsstück gebildet sein. Auch kann das Hohlstrukturelement sowohl das Monopile als auch das Übergangsstück aufweisen. Das Hohlstrukturelement kann auch als J-Tube gebildet sein.

Gemäß einem Ausführungsbeispiel wird vorgeschlagen, dass das Abschattungselement an dem Monopile oder dem Übergangsstück angeordnet ist. Gemäß einem Ausführungsbeispiel wird vorgeschlagen, dass das Abschattungselement an der J-Tube angeordnet ist.

Auch wird vorgeschlagen, dass das Abschattungselement das Übergangsstück kragenförmig überragt. Am Übergangsstück kann an der äußeren Mantelfläche eine umlaufende Plattform, insbesondere eine Landungsplattform angeordnet sein. An einer solchen Plattform kann das Abschattungselement zusätzlich radial nach außen weisend, kragenförmig angeordnet sein. Das Abschattungselement kann in der Höhe der Plattform (Airtight-Deck) angeordnet sein.

Das Abschattungselement kann horizontal in radialer Richtung von dem Hohlstrukturelement fortweisen. Zusätzlich kann das Abschattungselement in axialer Richtung geneigt sein. Dabei kann das Abschattungselement nach unten, insbesondere in Richtung des Hohlstrukturelements geneigt sein.

Den besten Effekt erzielt das Abschattungselement, wenn es zu Zeiten der maximalen Sonneneinstrahlung eine Abschattung der Kabelanordnung bewirkt. Aus diesem Grunde wird vorgeschlagen, dass das Abschattungselement im montierten Zustand des Hohlstrukturelements an der Südseite des Hohlstrukturelements angeordnet ist. Dies gilt für Installationen auf der Nordhalbkugel. Für Installationen auf der Südhalbkugel ist das Abschattungselement bevorzugt an der Nordseite des Hohlstrukturelements angeordnet.

Das Abschattungselement ist für eine verbesserte Kühlung perforiert, insbesondere geschlitzt oder gelocht. Die Schlitze sind dabei bevorzugt rechteckig. Ihre Längsachsen verlaufen bevorzugt senkrecht zur Längsachse des Hohlstrukturelements. Dies verhindert eine Sonneneinstrahlung auf die Kabelanordnung durch die Schlitze hindurch. Die Schlitze haben bevorzugt eine breite, die kleiner ist als die doppelte Wandstärke des Abschattungselements.

Um eine ausreichende Luftzirkulation zwischen dem Abschattungselement und dem Hohlstrukturelement und/oder der Kabelanordnung zu ermöglichen wird vorgeschlagen, dass zwischen dem Hohlstrukturelement und/oder der Kabelanordnung und dem Abschattungselement eine lichte Weite ist. Diese lichte Weite wird entlang des Bogenabschnitts variiert. Dabei ist die lichte Weite in einem Mittenbereich des Bogenabschnitts geringer, als die lichte Weite an zumindest einem äußeren Rand des Bogenabschnitts. Hierdurch wird zwischen dem Hohlstrukturelement und dem Abschattungselement ein Düseneffekt erzielt, wodurch die durchströmende Luft beschleunigt wird und so eine bessere Kühlfunktion hat.

Gemäß einem Ausführungsbeispiel wird vorgeschlagen, dass das Abschattungselement entlang des Bogenabschnitts auf der dem Hohlstrukturelement zugewandten Seite zumindest in Teilen konvex geformt ist. Diese Form führt zu einer erhöhten Strömungsgeschwindigkeit zwischen dem Hohlstrukturelement und dem Abschattungselement. Zur Erzielung eines Tragflächeneffekts wird vorgeschlagen, dass das Abschattungselement im Bereich zumindest eines äußeren Randes des Bogenabschnittes auf der dem Hohlstrukturelement zugewandten Seite konvex geformt ist.

An dem Hohlstrukturelement kann außen eine Plattform, insbesondere eine Landungsplattform angeordnet sein. Diese Ladungsplattform kann bereits eine Abschattung auf das Hohlstrukturelement bewirken. Zusätzlich hierzu kann das Abschattungselement vorgesehen sein. Um Material einzusparen, kann der Effekt der bereits vorhandenen Abschattung genutzt werden, in dem das Abschattungselement derart an dem Hohlstrukturelement angeordnet ist, dass im montierten Zustand des Hohlstrukturelements das Abschattungselement mit einem Abstand in Längsrichtung zu der Plattform an dem Hohlstrukturelement angeordnet ist. Dieser Abstand kann insbesondere abhängig von dem Breitengrad einer Montageposition des Windenergieanlage gewählt sein. Je höher die Sonne im Zenit steht, desto länger kann ein Schatten einer Plattform sein. Der Abstand in Längsrichtung des Hohlstrukturelements zwischen dem Abschattungselement und der Plattform kann dann größer sein.

Gemäß einem Ausführungsbeispiel wird vorgeschlagen, dass die Kabelanordnung zwischen der Gründungsstruktur und dem Abschattungselement geführt ist.

Das Abschattungselement ist insbesondere ein Blech, bevorzugt ein Stahlblech.

Das Abschattungselement ist mit Abstandshaltern an dem Hohlstrukturelement befestigt, so dass eine Luftzirkulation zwischen dem Hohlstrukturelement und dem Abschattungselement möglich ist.

Das Hohlstrukturelement ist insbesondere rohrförmig.

Ein weiterer Aspekt ist eine Windenergieanlage nach Anspruch 14.

Eine Windenergieanlage kann dabei eine Windkraftanlage, eine Substation, eine Konverterplattform (HGÜ Plattform), eine Umspannanlage oder dergleichen sein. Die Windenergieanlage ist insbesondere eine Offshore Anlage.

Nachfolgend wird der Gegenstand anhand einer Ausführungsbeispiele zeigenden Zeichnung näher erläutert. In der Zeichnung zeigen:
- Fig. 1a, b: Hohlstrukturelemente mit Kabelanordnungen;
- Fig. 2a: ein Hohlstrukturelement mit einem Abschattungselement gemäß einem Ausführungsbeispiel;
- Fig. 2b: ein Hohlstrukturelement mit einem Abschattungselement gemäß einem Ausführungsbeispiel;
- Fig. 2c: ein Hohlstrukturelement mit einem Abschattungselement gemäß einem Ausführungsbeispiel;
- Fig. 3a-d: verschiedene Anordnungen von Abschattungselementen;
- Fig. 4a, b: Ansichten von Abschattungselementen;
- Fig. 5a, b: Abschattungselement mit verschiedenen Strömungskonturen.

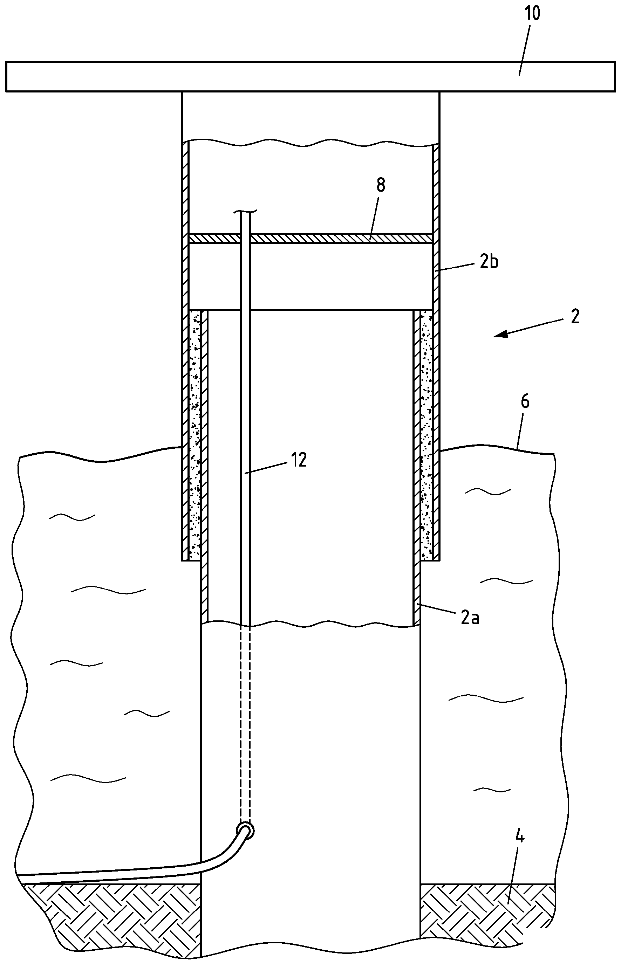

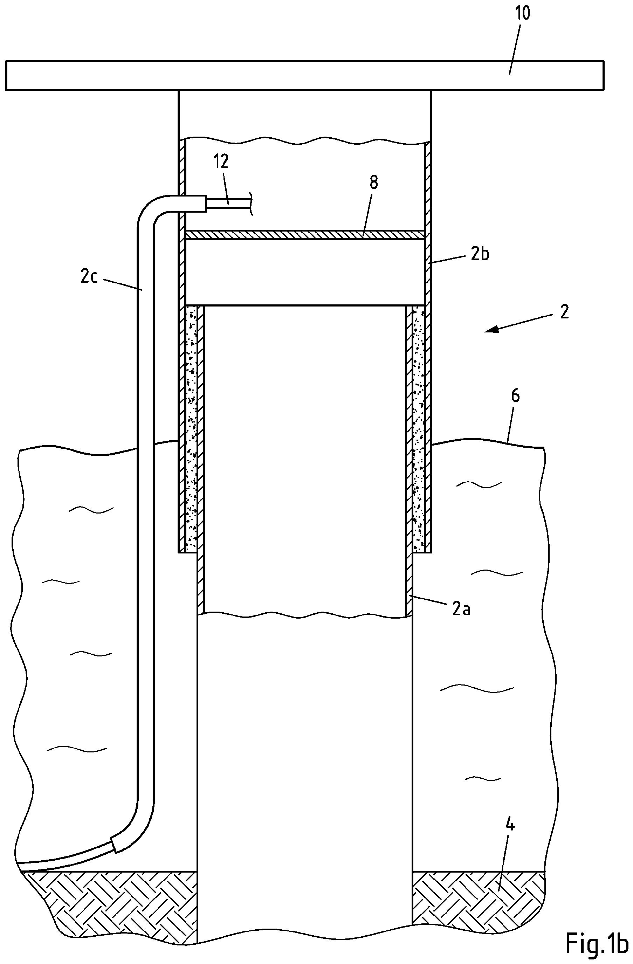

Fig. 1 zeigt ein Hohlstrukturelement 2 einer Windenergieanlage. Das Hohlstrukturelement 2 ist aus einem Monopile 2a sowie einem Transition Piece 2b als Gründungsstruktur gebildet.

Der Monopile 2a ist am Meeresboden 4 gegründet und ragt aus der Wasseroberfläche 6 heraus.

Der Monopile 2a wird in den Meeresboden 4 gerammt. Dabei kann sich das Maß des Monopiles 2a verändern. Um definierte Anschlusspunkte für einen Turm der Windenergieanlage zu erhalten, ist auf dem Monopile 2a das Transition Piece 2b aufgesetzt. Das Transition Piece 2b kann in seinem inneren einen Airtight Deck 8 aufweisen. Das Airtight-Deck 8 kann als Plattform verstanden werden. Auch kann an dem Transition Piece 2b eine umlaufende, außen angeordnete Plattform 10 angeordnet sein. Die Plattform 10 kann als Landungsplattform gebildet sein. Dieser Aufbau eines Hohlstrukturelements 2 ist hinlänglich bekannt.

Eine Kabelanordnung 12 kann aus einem oder mehreren Kabeln mit jeweils einem Isolator und einer Kabelseele aus einem elektrischen Leiter gebildet sein. Die Kabel können in der Kabelanordnung 12 in einer gemeinsamen Hülle, insbesondere einer gemeinsamen Isolation geführt sein.

In der Fig. 1a ist gezeigt, dass die Kabelanordnung 12 unterhalb der Wasseroberfläche 6 in das Innere des Hohlstrukturelements 2 hineingeführt ist und im Inneren des Hohlstrukturelements 2 bis hin zum Airtight-Deck 8 geführt wird. Ausgehend vom Airtight-Deck 8 erfolgt eine elektrische Kontaktierung der Kabel der Kabelanordnung 12 in an sich bekannter Art und Weise mit an sich bekannter Leistungselektronik.

Über die Kabel der Kabelanordnung 12 wird die von der Windenergieanlage 2 erzeugte elektrische Energie hin zu einem Energieversorgungsnetz transportiert. Dabei fließt über die Kabel der Kabelanordnung 12 erhebliche elektrische Leistung. Die dadurch bedingten hohen Ströme verursachen joulesche Verluste, die proportional zum ohmschen Widerstand der jeweiligen Leiter sind. Zur Reduktion des ohmschen Widerstands werden die Leiterquerschnitte groß gewählt.

Die entstehenden ohmschen Verluste müssten über Konvektion an die Umgebung abgegeben werden, um zu verhindern, dass sich die Kabelanordnung 12 so stark aufheizt, dass es zu Beschädigungen kommt.

Zwischen der Wasseroberfläche 6 und dem Airtight-Deck 8 ist der Luftaustausch innerhalb des Hohlstrukturelements 2 jedoch stark einschränkt, wenn nicht gar ausgeschlossen. Dadurch heizt sich der Innenraum des Hohlstrukturelements 2 auf und die ohmschen Verluste innerhalb der Kabel der Kabelanordnung 12 können nicht mehr gut abgeleitet werden.

Kommt es zu Zeiten von Starkwind zu großen elektrischen Leistungen, die über die Kabelanordnung 12 transportiert werden, heizen sich die Kabel der Kabelanordnung 12 besonders auf. Kommt es dann zusätzlich zu starker Sonneneinstrahlung auf das Hohlstrukturelement 2, so heizt der Innenraum des Hohlstrukturelements 2 zwischen der Wasseroberfläche 6 und dem Airtight-Deck 8 erheblich auf. Auch solche extremen Bedingungen müssen berücksichtigt werden, wenn die Leiterquerschnitte der Kabel der Kabelanordnung 12 dimensioniert werden.

Um die Leiterquerschnitte geringer dimensionieren zu können, wird vorgeschlagen, dass Hohlstrukturelement 2 abzuschatten, wie nachfolgend noch gezeigt werden wird.

Fig. 1b zeigt ein Hohlstrukturelement 2c, welches als J-Tube gebildet ist. Im Unterschied zu der Fig. 1a ist in der Fig. 1b die Kabelanordnung 12 in der J-Tube außerhalb der Gründungsstruktur geführt. Auch die J-Tube umschließt die Kabelanordnung 12 vollständig, so dass es ähnlich wie zuvor beschrieben, auch innerhalb der J-Tube zu erheblicher Wärmeentwicklung führen kann. Kommt es zu direkter Sonneneinstrahlung auf die J-Tubes, treten erhebliche Temperaturen innerhalb der Kabel der Kabelanordnung 12 auf. Auch hierzu wird eine Abschattung wie nachfolgend beschrieben vorgeschlagen. Das Hohlstrukturelement 2c kann auch (nicht gezeigt) innerhalb des Monopiles 2a und/oder des Transition Pieces 2b geführt sein.

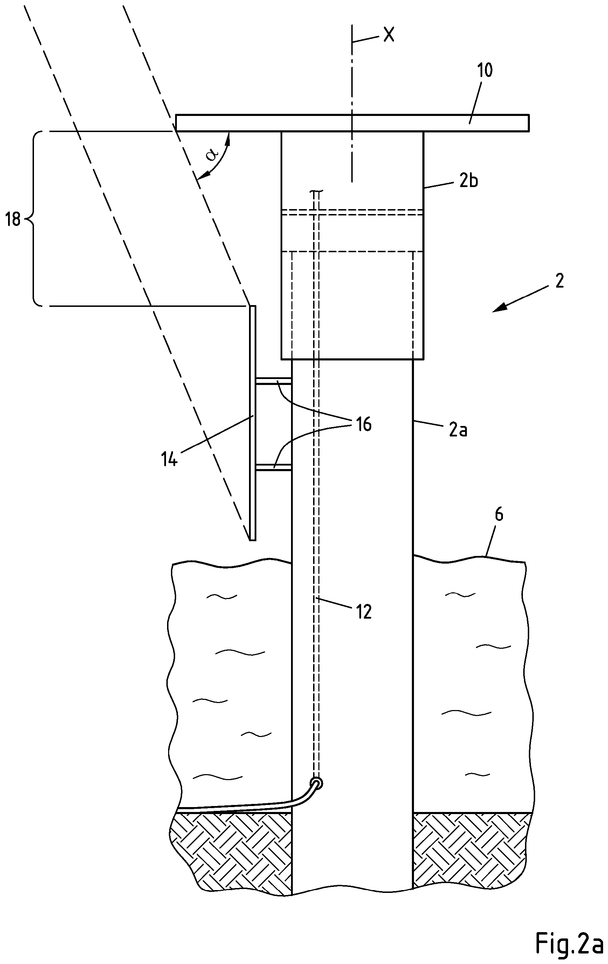

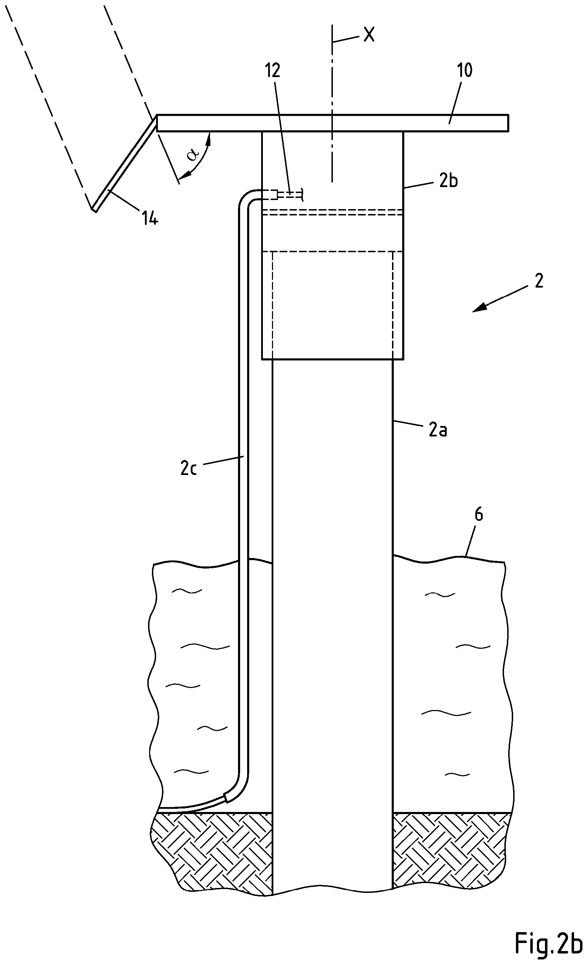

Fig. 2a zeigt ein Hohlstrukturelement 2 entsprechend der Fig. 1a. Die Kabelanordnung 12 ist in der Fig. 2a gemäß der Fig. 1a und in der Fig. 2b gemäß der Fig. 1b.

Zur Vermeidung von Sonneneinstrahlung, insbesondere wenn die Sonne nahe ihres Zenits ist, wird ein Abschattungselement 14 vorgeschlagen. Das Abschattungselement 14 kann mit Abstandshaltern 16 an dem Hohlstrukturelement 2 befestigt sein. Die Kabelanordnung 12 kann innerhalb des Hohlstrukturelements 2 geführt sein. Die Kabelanordnung 12 kann auch, wie in Fig. 2b gezeigt, außen an der Gründungsstruktur 2a,b an der als Hohlstrukturelement 2 c gebildeten J-Tube angeordnet sein. Dabei kann die Kabelanordnung 12 in einer lichten Weite zwischen dem Abschattungselement 14 und der äußeren Mantelfläche der Gründungsstruktur angeordnet sein.

Steht die Sonne nahe ihres Zenits, so strahlt sie im Winkel α auf das Hohlstrukturelement 2. Bedingt durch die nach außen kragende Plattform 10 ist ein Bereich zwischen der Plattform 10 und der Oberkante des Abschattungselements 14 bereits abgeschattet. In diesem Abstand entlang der Längsachse X des Hohlstrukturelements 2 kann das Abschattungselement 14 von der der Plattform 10 beabstandet sein. Durch das Abschattungselement 14 wird bewirkt, dass das Innere des Hohlstrukturelements 2 weniger aufheizt, sodass die Leiterquerschnitte der Kabel der Kabelanordnung 12 gegenüber herkömmlichen Anordnungen reduziert sein können.

Fig. 2b zeigt eine weitere Möglichkeit der Anordnung des Abschattungselements 14 unmittelbar an der Plattform 10. Das Abschattungselement 14 kann radial nach außen von der Plattform 10 weg weisen. Auch ist es möglich, dass das Abschattungselement 14 winklig nach unten geneigt ist. Die Länge der Auskragung sowie der Neigungswinkel kann so gewählt werden, dass durch das Abschattungselement 14 eine Abschattung des gesamten Hohlstrukturelements 2 bis im Wesentlichen hin zur Wasseroberfläche 6 bewirkt wird. Die Kabelanordnung 12 ist durch das Abschattungselement 14 abgeschattet. Die Kabelanordnung 12 kann auch wie in Fig. 2a gezeigt, in dem Hohlstrukturelement 2 angeordnet sein.

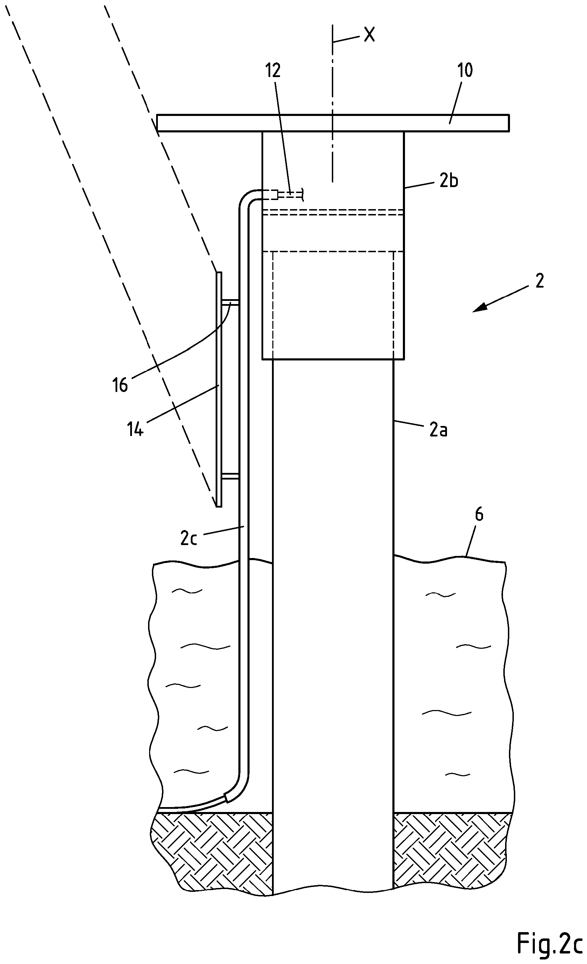

Fig. 2c zeigt eine Anordnung eines Hohlstrukturelements 2c als J-Tube außen an dem Monopile 2a und/oder dem Transition Piece 2b. An der J-Tube ist das Abschattungselement 14 unmittelbar über Stege 16 angeordnet. Die Abschattung der Kabelanordnung 12 erfolgt entsprechend den Ausführungen zu Fig. 2a, b. Die Elemente der Figs. 2a-c lassen sich frei miteinander kombinieren. Die Gründungsstruktur gemäß Fig. 2c kann auch ein nicht hohles Element, z.B. ein Fundament sein. Die Strukturen gemäß Figs. 2a-c sind insbesondere Offshore Strukturen.

Nachfolgend wird das Hohlstrukturelement 2 stellvertretend für die J-Tube 2c oder das Monopile 2a und/oder das Transition Piece 2b beschrieben.

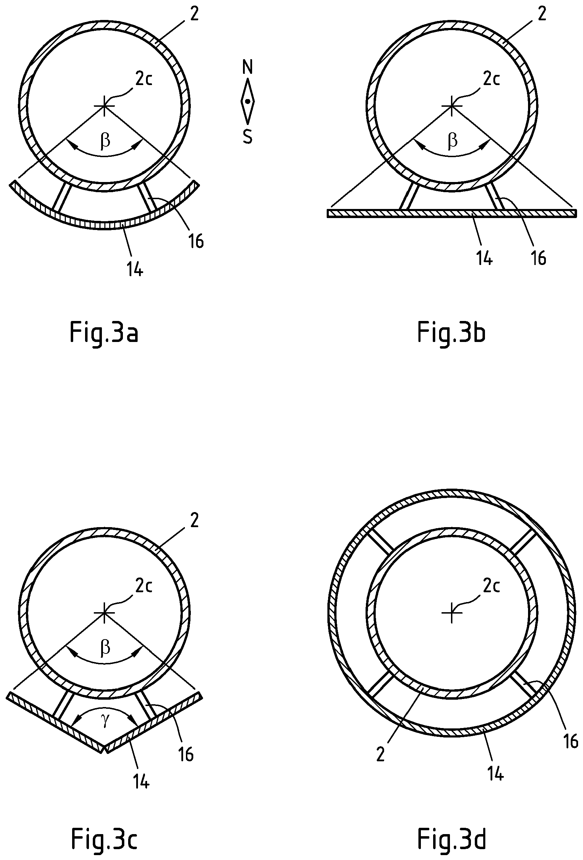

Die Fig. 3a-d zeigen einen Schnitt durch das Hohlstrukturelement 2 und das Abschattungselement 14 quer zur Längsachse X, insbesondere senkrecht hierzu.

In Fig. 3a zu erkennen ist, dass das Hochstrukturelement 2 rohrförmig ist. Beabstandet von dem Hohlstrukturelement 2 ist das Abschattungselement 14 in einem Bogensegment mit einem Bogenwinkel β aufgespannt. Der Radius zu einem Mittelpunkt 2c des Abschattungselements 14 ist größer als der Radius des Hohlstrukturelements 2.

Das Abschattungselement 14 ist über Abstandshalter 16 beabstandet von dem Hohlstrukturelement 2 daran befestigt.

Das Abschattungselement 14 ist insbesondere in der nördlichen Himmelsphäre Richtung Süden ausgerichtet, hingegen in der südlichen Himmelsphäre Richtung Norden ausgerichtet. Das in Fig. 3a gezeigte Abschattungselement 14 ist bogenförmig.

Fig. 3b zeigt ein weiteres Abschattungselement 14, welches gerade geformt ist, wobei das Abschattungselement 14 ebenfalls einen Bogenwinkel β aufspannt.

In der Fig. 3c ist ein Abschattungselement 14 aus zwei geraden Bauelementen, die in einem Winkel γ zueinander verlaufen, gebildet. Die Schenkel des Abschaltungselements 14 umgreifen das Hohlstrukturelement 2 in Teilen.

Fig. 3d zeigt ein Ausführungsbeispiel, bei dem das Abschattungselement 14 vollständig umlaufend um das Hohlstrukturelement 2 angeordnet ist.

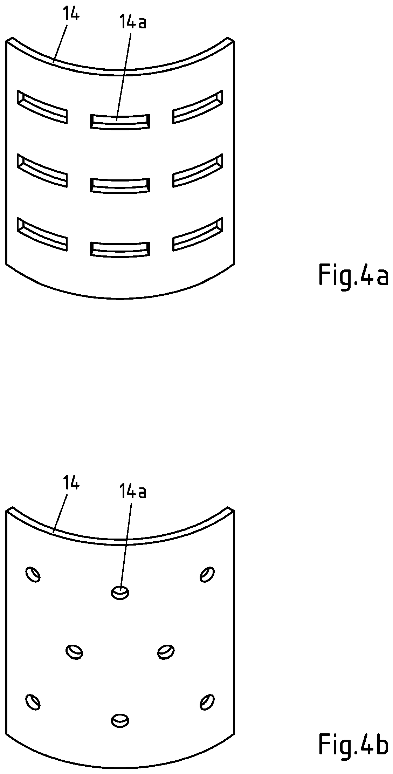

Wie bereits erläutert, kann das Abschattungselement 14 aus einem Blech gebildet sein und perforiert sein. Fig. 4a zeigt ein Abschattungselement 14 mit Schlitzen 14a. Fig. 4b zeigt ein Abschattungselement mit Löchern 14b. Die Schlitze 14a und/oder die Löcher 14b sorgen für eine gute Belüftung in dem Zwischenraum zwischen dem Hohlstrukturelement 2 und dem Abschattungselement 14.

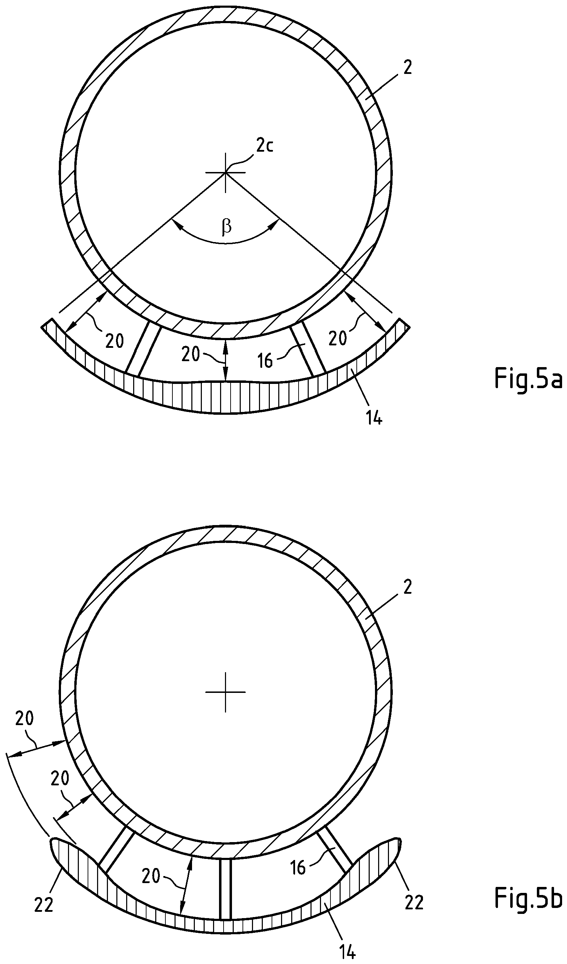

Das Abschattungselement 14 kann profiliert gebildet sein, insbesondere so profiliert, dass ein Abstand zwischen dem Abschattungselement 14 und dem Hohlstrukturelement 2 entlang des Bogenwinkels β variiert. Ein mögliches Ausführungsbeispiel ist in der Fig. 5a gezeigt. Hier ist die dem Hohlstrukturelement 2 zugewandte Oberfläche des Abschattungselements 15 konvex geformt, so dass ein Abstand 20 zwischen dem Hohlstrukturelement 2 und dem Abschattungselement 14 variiert. Gezeigt ist, dass der Abstand 20 in einem Mittenbereich geringer ist, als in einem Randbereich.

Fig. 5b zeigt ein Abschattungselement 14, welches in seinen Randbereichen 22 in der Art eines Flügels gebildet ist. Zu erkennen ist, dass im Randbereich 22 der Abstand 20 zwischen dem Abschattungselement 14 und dem Hohlstrukturelement 2 variiert, wobei zunächst ein größerer Abstand gegeben ist, dieser aufgrund der konvexen Form kleiner wird und hin zum Mittenbereich des Abschattungselements 14 wieder größer wird.

Durch die beiden Profilierungen wie in den Fig. 5a und b gezeigt, ist der Kühleffekt der zirkulierenden Luft zwischen dem Hohlstrukturelement 2 und dem Abschattungselement 14 vergrößert, da die Strömungsgeschwindigkeiten vorbeiströmender Luft erhöht werden.

### Bezugszeichenliste

- 2: Hohlstrukturelement
- 2a: Monopile
- 2b: Transition Piece
- 2c: J-Tube
- 2c: Mittelpunkt
- 4: Meeresboden
- 6: Wasseroberfläche
- 8: Airtight-Deck
- 10: Plattform
- 12: Kabelanordnung
- 14: Abschattungselement
- 14a: Schlitz
- 14b: Loch
- 16: Abstandshalter
- 18: Bereich
- 20: Abstand
- 22: Randbereich

## Patentansprüche

1. Hohlstrukturelement (2) einer Windenergieanlage, insbesondere einer Offshore-Windenergieanlage, umfassend:
- ein Hohlstrukturelement (2), und
- eine entlang des Hohlstrukturelements (2) verlaufende Kabelanordnung (12), wobei
- ein Abschattungselement (14) an dem Hohlstrukturelement (2) mit einem Abstand zu der Kabelanordnung (12) angeordnet ist,
**dadurch gekennzeichnet,**
- **dass** das Abschattungselement (14) entlang eines Bogenabschnitts um das Hohlstrukturelement (2) herum angeordnet ist und eine lichte Weite zwischen dem Hohlstrukturelement (2) und dem Abschattungselement (14) entlang des Bogenabschnitts derart variiert, dass die lichte Weite in einem Mittenbereich des Bogenabschnitts geringer ist, als die lichte Weite an zumindest einem äußeren Rand des Bogenabschnitts.

2. Hohlstrukturelement (2) nach Anspruch 1,
**dadurch gekennzeichnet,**
- **dass** das Abschattungselement (14) bogenförmig geformt ist, wobei das Abschattungselement (14) eine Krümmung aufweist, insbesondere dass das Abschattungselement (14) zumindest einen Kreisbogen aufweist oder
- **dass** das Abschattungselement (14) gerade ist oder
- **dass** das Abschattungselement (14) aus zumindest zwei winklig zueinander verlaufenden, geraden Abschnitten geformt ist, wobei der Winkel zwischen den geraden Abschnitten das Hohlstrukturelement (2) umgreift.

3. Hohlstrukturelement (2) nach einem der vorangehenden Ansprüche,
**dadurch gekennzeichnet,**
- **dass** der Bogenabschnitt einen Bogenwinkel von zumindest 45° bevorzugt zumindest 120, insbesondere zumindest 240°, insbesondere zwischen 90° und 150°, insbesondere im Bereich zwischen 110° und 130° umschließt.

4. Hohlstrukturelement (2) nach einem der vorangehenden Ansprüche,
**dadurch gekennzeichnet,**
- **dass** das Abschattungselement (14) an einer äußeren Mantelfläche des Hohlstrukturelements (2) angeordnet ist und/oder
- **dass** das Abschattungselement (14) mit Abstandshaltern (16) an dem Hohlstrukturelement (2) befestigt ist.

5. Hohlstrukturelement (2) nach einem der vorangehenden Ansprüche,
**dadurch gekennzeichnet,**
- **dass** das Hohlstrukturelement (2) ein Monopile (2a) und/oder ein Übergangsstück aufweist und/oder eine J-Tube (2c) ist.

6. Hohlstrukturelement (2) nach einem der vorangehenden Ansprüche,
**dadurch gekennzeichnet,**
- **dass** das Abschattungselement (14) an dem Monopile (2a) oder dem Übergangsstück angeordnet ist.

7. Hohlstrukturelement (2) nach einem der vorangehenden Ansprüche,
**dadurch gekennzeichnet,**
- **dass** das Abschattungselement (14) das Hohlstrukturelement (2) kragenförmig überragt, insbesondere dass das Abschattungselement (14) das Hohlstrukturelement (2) radial nach außen überragt insbesondere im Bereich einer Plattform (10) und/oder dass das Abschattungselement (14) in Richtung des Hohlstrukturelements (2) geneigt ist.

8. Hohlstrukturelement (2) nach einem der vorangehenden Ansprüche,
**dadurch gekennzeichnet,**
- **dass** das Abschattungselement (14) im montierten Zustand an der Südseite des Hohlstrukturelements (2) angeordnet ist.und/oder
- **dass** das Abschattungselement (14) perforiert, insbesondere geschlitzt und/oder gelocht ist.

9. Hohlstrukturelement (2) nach einem der vorangehenden Ansprüche,
**dadurch gekennzeichnet,**
- **dass** das Abschattungselement (14) entlang des Bogenabschnitts auf der dem Hohlstrukturelement (2) zugewandten Seite zumindest in Teilen konvex geformt ist, insbesondere dass das Abschattungselement (14) im Bereich zumindest eines äußeren Randes des Bogenabschnitts auf der dem Hohlstrukturelement (2) zugewandten Seite konvex geformt ist.

10. Hohlstrukturelement (2) nach einem der vorangehenden Ansprüche,
**dadurch gekennzeichnet,**
- **dass** das Abschattungselement (14) derart an dem Hohlstrukturelement (2) angeordnet ist, dass im montierten Zustand des Hohlstrukturelements (2) das Abschattungselement (14) mit einem Abstand in Längsrichtung zu einer Plattform (10) an dem Hohlstrukturelement (2) angeordnet ist, insbesondere dass der Abstand abhängig von einem Breitengrad einer Montageposition des Hohlstrukturelements (2) gewählt ist.

11. Hohlstrukturelement (2) nach einem der vorangehenden Ansprüche,
**dadurch gekennzeichnet,**
- **dass** die Kabelanordnung (12) innerhalb des Hohlstrukturelements (2) und/oder zwischen dem Hohlstrukturelement (2) und dem Abschattungselement (14) geführt ist.

12. Hohlstrukturelement (2) nach einem der vorangehenden Ansprüche,
**dadurch gekennzeichnet,**
- **dass** das Abschattungselement (14) aus einem Blech gebildet ist.

13. Hohlstrukturelement (2) nach einem der vorangehenden Ansprüche,
**dadurch gekennzeichnet,**
- **dass** das Hohlstrukturelement (2) rohrförmig ist.

14. Windenergieanlage, insbesondere Offshore-Windenergieanlage mit einem Hohlstrukturelement (2) nach einem der vorangehenden Ansprüche.

## Claims

1. Hollow structural element (2) of a wind energy plant, in particular an offshore wind energy plant, comprising:
- a hollow structural element (2), and
- a cable arrangement (12) extending along the hollow structural element (2),
wherein
- a shading element (14) is arranged at the hollow structural element (2) at a distance from the cable arrangement (12).
**characterized in**
- **that** the shading element (14) is arranged along an arc section around the hollow structural element (2) and
- a clear width between the hollow structural element (2) and the shading element (14) varies along the arc section, such that the clear width in a central region of the arc section is smaller than the clear width at at least one outer edge of the arc section.

2. Hollow structural element (2) according to claim 1,
**characterized in**
- **that** the shading element (14) is arc-shaped, wherein the shading element (14) has a curvature, in particular that the shading element (14) has at least one circular arc or
- **that** the shading element (14) is straight or
- **that** the shading element (14) is formed from at least two straight sections running at an angle to one another, wherein the angle between the straight sections embraces the hollow structural element (2).

3. Hollow structural element (2)according to one of the preceding claims,
**characterized in**
- **that** the arc section spans an arc angle of at least 45° preferably at least 120, in particular at least 240°, in particular between 90° and 150°, in particular in the range between 110° and 130°.

4. Hollow structural element (2) according to one of the preceding claims,
**characterized in**
- **that** the shading element (14) is arranged at an outer lateral surface of the hollow structural element (2) and/or
- **that** the shading element (14) is fastened to the hollow structural element (2) with spacers (16).

5. Hollow structural element (2) according to one of the preceding claims,
**characterized in**
- **that** the hollow structural element (2) comprises a monopile (2a) and/or a transition piece and/or is a J-tube (2c).

6. Hollow structural element (2) according to any one of the preceding claims,
**characterized in**
- **that** the shading element (14) is arranged at the monopile (2a) or at the transition piece.

7. Hollow structural element (2) according to one of the preceding claims,
**characterized in**
- **that** the shading element (14) projects beyond the hollow structural element (2) in a collar-like fashion, in particular that the shading element (14) projects beyond the hollow structural element (2) radially outwardly, in particular in the region of a platform (10), and/or that the shading element (14) is inclined in the direction of the hollow structural element (2).

8. Hollow structural element (2) according to one of the preceding claims,
**characterized in**
- **that** the shading element (14) is arranged on the south side of the hollow structural element in the installed state, and/or
- **that** the shading element (14) is perforated, in particular slotted and/or round perforated.

9. Hollow structural element (2) according to one of the preceding claims,
**characterized in**
- **that** the shading element (14) is at least in parts convexly shaped along the arc section on the side facing the hollow structural element (2), in particular that the shading element (14) is convexly shaped in the region of at least one outer edge of the arc section on the side facing the hollow structural element (2).

10. Hollow structural element (2) according to one of the preceding claims,
**characterized in**
- **that** the shading element (14) is arranged on the hollow structural element (2) in such a way that, in the installed state of the hollow structural element (2), the shading element (14) is arranged on the hollow structural element (2) at a distance in the longitudinal direction from a platform, in particular that the distance is chosen as a function of a latitude of an assembly position of the hollow structural element (2).

11. Hollow structural element (2) according to one of the preceding claims,
**characterized in**
- **that** the cable arrangement (12) is guided within the hollow structural element (2) and/or between the hollow structural element (2) and the shading element (14).

12. Hollow structural element according to any one of the preceding claims,
**characterized in**
- **that** the shading element (14) is formed from a metal sheet.

13. Hollow structural element according to one of the preceding claims,
**characterized in**
- **that** the hollow structural element (2) is tubular.

14. Wind energy plant, in particular offshore wind energy plant comprising a hollow structural element (2) according to one of the preceding claims.

## Revendications

1. Élément de structure creuse (2) d'une installation d'énergie éolienne, en particulier d'une installation d'énergie éolienne offshore, comprenant :
- un élément de structure creuse (2), et
- un arrangement de câbles (12) s'étendant le long de l'élément de structure creuse (2), où
- un élément d'ombrage (14) est disposé sur l'élément de structure creuse (2) à une distance de l'arrangement de câbles (12),
caractérisé en ce
- l'élément d'ombrage (14) est disposé le long d'une section d'arc autour de l'élément de structure creuse (2) et une distance horizontale libre entre l'élément de structure creuse (2) et l'élément d'ombrage (14) varie le long de la section d'arc de telle sorte que la distance horizontale libre dans une zone centrale de la section d'arc est inférieure à la distance horizontale libre sur au moins un bord extérieur de la section d'arc.

2. Élément de structure creuse (2) selon la revendication 1,
**caractérisé en ce**
- **que** l'élément d'ombrage (14) a une forme arquée, où l'élément d'ombrage (14) a une courbure, en particulier que l'élément d'ombrage (14) présente au moins un arc de cercle ou
- **que** l'élément d'ombrage (14) est droit ou
- **que** l'élément d'occultation (14) est formé d'au moins deux sections droites s'étendant en angle l'une par rapport à l'autre, où l'angle entre les sections droites entoure l'élément de structure creuse (2).

3. Élément de structure creuse (2) selon l'une des revendications précédentes,
**caractérisé en ce**
- **que** la section courbe entoure un angle d'arc d'au moins 45°, de préférence d'au moins 120, en particulier d'au moins 240°, en particulier entre 90° et 150°, en particulier entre 110° et 130°.

4. Élément de structure creuse (2) selon l'une des revendications précédentes,
**caractérisé en ce**
- **que** l'élément d'ombrage (14) est disposé sur une surface d'enveloppe extérieure de l'élément de structure creuse (2) et/ou
- **que** l'élément d'ombrage (14) est fixé à l'élément de structure creuse (2) par des écarteurs (16).

5. Élément de structure creuse (2) selon l'une des revendications précédentes,
**caractérisé en ce**
- **que** l'élément de structure creuse (2) a un monopile (2a) et/ou une pièce de transition et/ou est un J-tube (2c).

6. Elément de structure creuse (2) selon l'une des revendications précédentes,
**caractérisé en ce**
- **que** l'élément d'ombrage (14) est disposé sur le monopile (2a) ou la pièce de transition.

7. Élément de structure creuse (2) selon l'une des revendications précédentes,
**caractérisé en ce**
- **que** l'élément d'ombrage (14) dépasse de l'élément de structure creuse (2) en forme de col, en particulier que l'élément d'ombrage (14) dépasse de l'élément de structure creuse (2) radialement vers l'extérieur, en particulier dans la zone d'une plate-forme (10) et/ou que l'élément d'ombrage (14) est incliné en direction de l'élément de structure creuse (2).

8. Élément de structure creuse (2) selon l'une des revendications précédentes,
**caractérisé en ce**
- **que** l'élément d'ombrage (14) est disposé à l'état monté sur le côté sud de l'élément de structure creuse (2), et/ou
- **que** l'élément d'ombrage (14) est perforé, en particulier fendu et/ou perforé.

9. Élément de structure creuse (2) selon l'une des revendications précédentes,
**caractérisé en ce,**
- **que** l'élément d'ombrage (14) a une forme convexe au moins en partie le long du section d'arc sur le côté tourné vers l'élément de structure creuse (2), en particulier que l'élément d'ombrage (14) a une forme convexe dans la zone d'au moins un bord extérieur du section d'arc sur le côté tourné vers l'élément de structure creuse (2).

10. Élément de structure creuse (2) selon l'une des revendications précédentes,
**caractérisé en ce**
- **que** l'élément d'ombrage (14) est disposé sur l'élément de structure creuse (2) de telle sorte que, à l'état monté de l'élément de structure creuse (2), l'élément d'ombrage (14) est disposé sur l'élément de structure creuse (2) à une distance dans la direction longitudinale par rapport à une plate-forme (10), en particulier que la distance est choisie en fonction d'un degré de largeur d'une position de montage de l'élément de structure creuse (2).

11. Élément de structure creuse (2) selon l'une des revendications précédentes,
**caractérisé en ce**
- **que** l'arrangement de câbles (12) est guidé à l'intérieur de l'élément de structure creuse (2) et/ou entre l'élément de structure creuse (2) et l'élément d'ombrage (14).

12. Élément de structure creuse (2) selon l'une des revendications précédentes,
**caractérisé en ce**
- **que** l'élément d'ombrage (14) est formé d'une tôle.

13. Élément de structure creuse (2) selon l'une des revendications précédentes,
**caractérisé en ce**
- **que** l'élément de structure creuse (2) est en forme de tube.

14. Installation d'énergie éolienne, en particulier installation d'énergie éolienne offshore, avec un élément de structure creuse (2) selon l'une des revendications précédentes.
